(19) Europäisches Patentamt / European Patent Office / Office européen des brevets

(11) **EP 4 386 044 A1**

(12) **EUROPEAN PATENT APPLICATION**
published in accordance with Art. 153(4) EPC

(43) Date of publication:
**19.06.2024 Bulletin 2024/25**

(21) Application number: **22855884.7**

(22) Date of filing: **09.08.2022**

(51) International Patent Classification (IPC):
*C08J 9/32* $^{(2006.01)}$         *B01J 13/14* $^{(2006.01)}$
*C08J 3/22* $^{(2006.01)}$         *C08J 9/14* $^{(2006.01)}$
*C09K 3/00* $^{(2006.01)}$

(52) Cooperative Patent Classification (CPC):
**B01J 13/14; C08J 3/22; C08J 9/14; C08J 9/32; C09K 3/00**

(86) International application number:
**PCT/JP2022/030432**

(87) International publication number:
**WO 2023/017822 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.08.2021   JP 2021131364**
**24.01.2022   JP 2022008514**

(71) Applicant: **SEKISUI CHEMICAL CO., LTD.**
**530-0047 (JP)**

(72) Inventors:
• **KAWAGUCHI, Yasuhiro**
**Shunan-shi, Yamaguchi 746-0006 (JP)**
• **YOSHIDA, Hirokazu**
**Shunan-shi, Yamaguchi 746-0006 (JP)**

(74) Representative: **Cabinet Beau de Loménie**
**158, rue de l'Université**
**75340 Paris Cedex 07 (FR)**

(54) **MASTERBATCH FOR FOAM MOLDING AND MOLDED FOAM ARTICLE**

(57)    The present invention provides a masterbatch for foam molding from which a foam molded article capable of maintaining foaming over time and having less excessive foaming can be produced, and a foam molded article produced using the masterbatch for foam molding. Provided is a masterbatch for foam molding containing: a base resin; and a thermally expandable microcapsule, the masterbatch satisfying a ratio of a porosity with a pore size of 0.001 um or more to the interfacial area per unit weight (porosity with a pore size of 0.001 um or more/interfacial area per unit weight) of 0.015%/cm$^2$/g or less and having a volatile content of 0.7% by weight or less.

EP 4 386 044 A1

**Description**

TECHNICAL FIELD

The present invention relates to a masterbatch for foam molding and a foam molded article produced using the masterbatch for foam molding.

BACKGROUND ART

Plastic foams are used in various applications because they can exhibit various properties including heat shielding, heat insulation, sound insulation, sound absorption, vibration control, and weight reduction depending on the material of the foam and the state of the formed cells. Examples of a method for producing such a plastic foam include a method in which a masterbatch containing a chemical foaming agent is heated to foam and then molded.
Patent Literature 1 describes that use of ethylene-$\alpha$-olefin copolymer masterbatch pellets containing a chemical foaming agent enables production of an injection foam molded article that has a high hardness and a high expansion ratio and contains uniform cells formed therein, regardless of the type of resin.
Patent Literature 2 discloses a foam resin masterbatch that contains a polyolefin resin or a styrene resin as a base resin and a thermally expandable microcapsule as a foaming agent instead of a chemical foaming agent.

CITATION LIST

- Patent Literature

    Patent Literature 1: JP 2000-178372 A
    Patent Literature 2: JP H11-343362 A

SUMMARY OF INVENTION

- Technical Problem

A masterbatch containing a chemical foaming agent is difficult to handle because it may not foam even when heated and the foaming agent contained therein may rapidly decompose in an injection foam molding machine. Depending on the type of resin, a sufficient expansion ratio cannot be achieved. In such a case, it may be difficult to obtain a molded article with a desired hardness.
In addition, a chemical foaming agent produces a decomposition gas as well as a foaming residue upon thermal decomposition thereof. The residue remaining in the molded article may affect the adhesion performance of the molded article. Moreover, when a chemical foaming agent is used, maintenance of foaming over time is disadvantageously difficult.
Even when a thermally expandable microcapsule is used, the expansion ratio of the resulting foam is low, and it is difficult to obtain a foam molded article with less excessive foaming.
The present invention aims to provide a masterbatch for foam molding from which a foam molded article capable of maintaining foaming over time and having less excessive foaming can be produced. The present invention also aims to provide a foam molded article produced using the masterbatch for foam molding.

- Solution to Problem

The present disclosure (1) is a masterbatch for foam molding containing: a base resin; and a thermally expandable microcapsule, the masterbatch satisfying a ratio of a porosity with a pore size of 0.001 um or more to an interfacial area per unit weight (porosity with a pore size of 0.001 $\mu$m or more/interfacial area per unit weight) of 0.015%/cm$^2$/g or less and having a volatile content of 0.7% by weight or less.
The present disclosure (2) is the masterbatch for foam molding according to the present disclosure (1), wherein a particle size distribution (CV value) is 20% or less.
The present disclosure (3) is the masterbatch for foam molding according to the present disclosure (1) or (2), wherein a porosity with a pore size of 0.1 um or more is 4% or less.
The present disclosure (4) is the masterbatch for foam molding according to any one of the present disclosures (1) to (3), wherein the porosity with a pore size of 0.001 um or more is 11% or less.

The present disclosure (5) is the masterbatch for foam molding according to any one of the present disclosures (1) to (4), wherein the base resin includes at least one selected from the group consisting of a polyethylene-based resin and an acrylic resin.

The present disclosure (6) is the masterbatch for foam molding according to any one of the present disclosures (1) to (5), wherein the base resin is contained in an amount of 30% by weight or more and 80% by weight or less and the thermally expandable microcapsule is contained in an amount of 20% by weight or more and 70% by weight or less.

The present disclosure (7) is the masterbatch for foam molding according to any one of the present disclosures (1) to (6), wherein the masterbatch has an interfacial area per unit weight of 500 to 1,600 cm$^2$/g.

The present disclosure (8) is a foam molded article containing the masterbatch for foam molding according to any one of the present disclosures (1) to (7).

The present invention will be described in detail below.

As a result of intensive studies, the present inventors found out that when a ratio of a porosity to an interfacial area per unit weight and a volatile content are each within a predetermined range, a foam molded article capable of maintaining foaming over time and having less excessive foaming can be obtained. Thus, the present invention was completed.

The masterbatch for foam molding of the present invention preferably has a porosity with a pore size of 0.001 um or more of 11% or less. When the porosity with a pore size of 0.001 $\mu$m or more is within the above range, the volatile content of the masterbatch can be further reduced. The upper limit of the porosity with a pore size of 0.001 um or more is more preferably 10%, still more preferably 9.0%, even more preferably 8.5% and the lower limit thereof is preferably 1%, and may be, for example, 5% or more, particularly 6% or more, especially 7% or more.

The porosity with a pore size of 0.001 $\mu$m or more herein means the percentage of the volume of pores with a pore size of 0.001 $\mu$m or more in the volume of the masterbatch for foam molding.

The masterbatch for foam molding of the present invention preferably has a porosity with a pore size of 0.1 $\mu$m or more of 4% or less. When the porosity with a pore size of 0.1 um or more is within the above range, the volatile content of the masterbatch can be further reduced. The upper limit of the porosity with a pore size of 0.1 um or more is more preferably 3%, still more preferably 2°;, even more preferably 1.8%, and the lower limit thereof is preferably 0.1%, and may be, for example, 0.2% or more, particularly 0.3% or more.

The porosity with a pore size of 0.1 $\mu$m or more herein means the percentage of the volume of pores with a pore size of 0.1 $\mu$m or more in the volume of the masterbatch for foam molding.

The porosity with a pore size of 0.001 $\mu$m or more and the porosity with a pore size of 0.1 um or more can be measured by a mercury intrusion method using, for example, a porosimeter (Thermo Pascal 14B, available from Thermo Fisher Scientific Inc.).

In the masterbatch for foam molding of the present invention, the area of the contact interface between the thermally expandable microcapsule and the base resin in 1 g of the masterbatch for foam molding (interfacial area per unit weight) is preferably 500 cm$^2$/g or more and 1,600 cm$^2$/g or less. When the interfacial area per unit weight is within the above range, a highly foamable masterbatch can be obtained. The lower limit of the interfacial area per unit weight is more preferably 650 cm$^2$/g, still more preferably 670 cm$^2$/g, and the upper limit thereof is more preferably 1,400 cm$^2$/g, still more preferably 1,200 cm$^2$/g.

The interfacial area per unit weight herein can be calculated from the volume average particle size and true specific gravity of the thermally expandable microcapsule, and the amount of the thermally expandable microcapsule in the masterbatch for foam molding.

The masterbatch for foam molding of the present invention has a ratio of the porosity with a pore size of 0.001 $\mu$m or more to the interfacial area per unit weight (porosity with a pore size of 0.001 $\mu$m or more/interfacial area per unit weight) of 0.015%/cm$^2$/g or less. This enables production of a foam molded article capable of maintaining foaming over time and having less excessive foaming. As a result, the masterbatch can be suitably used for molding during which a strong shearing force is applied and molding which requires a low molding temperature. The lower limit of the (porosity with a pore size of 0.001 um or more/interfacial area per unit weight) is preferably 0.005%/cm$^2$/g, and the upper limit thereof is preferably 0.013%/cm$^2$/g. The lower limit is more preferably 0.007%/cm$^2$/g, and the upper limit is more preferably 0.012%/cm$^2$/g.

In the masterbatch for foam molding of the present invention, the lower limit of the average pore size is preferably 0.01 $\mu$m and the upper limit thereof is preferably 0.05 $\mu$m. When the average pore size is within the above range, the volatile content can be further reduced. The lower limit of the average pore size is more preferably 0.012 $\mu$m and the upper limit thereof is more preferably 0.04 $\mu$m.

The average pore size herein can be measured by a mercury intrusion method as in the cases of the porosity with a pore size of 0.001 $\mu$m or more and the porosity with a pore size of 0.1 $\mu$m or more.

The masterbatch for foam molding of the present invention has a volatile content of 0.7% by weight or less. When the volatile content is 0.7% by weight or less, uniform foam cells can be formed when the masterbatch is mixed with different resin(s) in foam molding. The lower limit of the volatile content is preferably 0.2% by weight, more preferably 0.3% by weight, and the upper limit thereof is preferably 0.6% by weight, more preferably 0.5% by weight.

The volatile content herein can be measured from a change in weight by heating in an oven at 70°C for 60 minutes.

The masterbatch for foam molding of the present invention preferably has an average outer size of 1.0 mm or larger and 4.0 mm or smaller. With the average outer size within the above range, the masterbatch allows uniform dispersion of the thermally expandable microcapsule contained therein. The lower limit of the outer size is more preferably 1.3 mm, still more preferably 1.5 mm, and the upper limit thereof is more preferably 3.5 mm, still more preferably 3.0 mm.

The masterbatch for foam molding of the present invention preferably has a particle size distribution (CV value) of 20% or less. When the CV value is 20% or less, the masterbatch can be uniformly kneaded with resin during extrusion or injection foam molding. The lower limit of the CV value is preferably 0.5%, and the upper limit thereof is more preferably 5.0%.

The average outer size and CV value can be measured by larger sample size evaluation (for example, n = 10) of actual size measurement with a vernier caliper.

The masterbatch for foam molding of the present invention may have any shape. Preferably, the masterbatch for foam molding of the present invention has a columnar shape. The columnar shape is preferably a circular cylinder shape, a prism shape, or a similar shape. Examples of the columnar shape include a circular cylinder shape, an elliptical cylinder shape, and a polygonal columnar shape (e.g., triangular columnar shape, square columnar shape, pentagonal columnar shape, hexagonal columnar shape). Particularly preferred is a circular cylinder shape from the standpoint of handleability. The masterbatch for foam molding of the present invention may have fine protrusions and depressions.

The lower limit of the true specific gravity of the masterbatch for foam molding of the present invention is preferably 0.80 g/cm$^3$. The true specific gravity of the masterbatch of 0.80 g/cm$^3$ or more means that the thermally expandable microcapsule in the masterbatch is expanded. With such a masterbatch, a decrease in expansion ratio of a molded article obtained by molding the masterbatch can be suppressed.

The lower limit of the true specific gravity is more preferably 0.90 g/cm$^3$, and the upper limit thereof is preferably 1.0 g/cm$^3$.

The true specific gravity refers to the specific gravity of the material alone, excluding pores, and represents the ratio between the mass of a unit volume of the masterbatch at 20°C and the mass of water of the same volume at 4°C. The true specific gravity can be measured by a method in conformity with the A method of JIS K 7112 (water substitution method).

The masterbatch for foam molding of the present invention contains a base resin.

The base resin herein contains at least one selected from an acrylic resin and a polyethylene-based resin. Use of such a base resin enables production of a foam molded article with good appearance quality.

Examples of the acrylic resin include homopolymers of acrylic monomers such as acrylic acid, methacrylic acid, and (meth)acrylic acid esters, and (meth)acrylic copolymers containing any of these.

Examples of the (meth)acrylic acid esters include methyl (meth)acrylate, ethyl (meth)acrylate, isopropyl (meth)acrylate, n-butyl (meth)acrylate, and isobutyl (meth)acrylate. Examples of the (meth)acrylic acid esters also include n-amyl (meth)acrylate, isoamyl (meth)acrylate, n-hexyl (meth)acrylate, 2-ethylhexyl (meth)acrylate, and n-octyl (meth)acrylate. The term "(meth)acrylic acid" refers to acrylic acid or methacrylic acid.

In the (meth)acrylic copolymers, examples of different comonomers to be copolymerized with acrylic monomers include α-olefins, styrene, α-methylstyrene, vinyltoluene, acrylonitrile, methacrylonitrile, and vinyl acetate.

Among these, preferred are copolymers of acrylic monomers and α-olefins, and more preferred is an ethylene-methyl methacrylate copolymer (EMMA).

These comonomers can exist in the form of random copolymers, graft copolymers, and block copolymers in the acrylic resin.

When the acrylic resin is an ethylene-methyl methacrylate copolymer, the amount of methyl methacrylate (MMA) is preferably 32% by weight or less, more preferably 25% by weight or less, and is usually 0% by weight or more.

Use of a (meth)acrylic copolymer having the MMA content within the above range can increase the moldability and the dispersibility of the thermally expandable microcapsule.

The acrylic resin has a weight average molecular weight of 10,000 or more.

When the weight-average molecular weight is set within the above range, a molded article obtained has an excellent appearance.

The weight average molecular weight (Mw) is measured as the polystyrene equivalent molecular weight by gel permeation chromatography (GPC).

The lower limit of the melt index of the acrylic resin is preferably 1 g/10 min, and the upper limit thereof is preferably 500 g/10 min, more preferably 50 g/10 min.

When the acrylic resin has a melt index of 1 g/10 min or more, deformation of the masterbatch can be prevented. When the acrylic resin has a melt index of 500 g/10 min or less, the appearance of the resulting molded article can be improved.

The melt index is an index of fluidity of a resin, and is determined as follows. A predetermined amount of a synthetic resin is heated at a predetermined temperature (e.g., 190°C) and pressurized at a predetermined load (e.g., 2.16 kg) in a circular cylindrical container heated with a heater. The amount of the resin extruded from an opening (nozzle) provided at the bottom of the container per 10 minutes is determined as the melt index. The unit is "g/10 min". The melt index is measured by a measurement method specified in JIS K7210-1.

The polyethylene-based resin may be any resin, and examples thereof include polyethylene resins such as a low-density polyethylene resin, a high-density polyethylene resin, a linear low-density polyethylene resin, and an ultra-high molecular weight polyethylene resin. Examples also include copolymers such as an ethylene-vinyl acetate copolymer, an ethylene-methyl acrylate copolymer, an ethylene-ethyl acrylate copolymer, an ethylene-methyl methacrylate copolymer, an ethylene-dimethylaminomethyl methacrylate copolymer, an ethylene-vinyl alcohol copolymer, and an ethylene-vinyl alcohol copolymer. Among these, the polyethylene-based resin is preferably a low-density polyethylene resin.

The base resin may be a resin mixture containing an acrylic resin and a polyethylene-based resin. In this case, the mixing ratio of an acrylic resin and a polyethylene-based resin is preferably 3:7 to 7:3.

The base resin may contain 100% by weight of at least one selected from an acrylic resin and a polyethylene-based resin. Alternatively, the base resin may be prepared by appropriately mixing one or more different resin component(s) in addition to the acrylic resin and/or the polyethylene-based resin.

When the different resin component(s) is/are used, the proportion of the acrylic resin is preferably 80% by weight or more, more preferably 90% by weight or more, and is usually less than 100% by weight.

An example of the different resin component is a rubber component. Examples of the rubber component include natural rubber (NR), butadiene rubber (BR), styrenebutadiene rubber (SBR), isoprene rubber (IR), acrylonitrile-butadiene rubber (NBR), butyl rubber (IIR), chloroprene rubber (CR), urethane rubber (U), and silicone rubber (Si). One or more selected from the above rubber components may be used in combination.

The different resin component used may be a general thermoplastic resin.

Examples of the thermoplastic resin include general thermoplastic resins such as polyvinyl chloride, polypropylene, polypropylene oxide, and polystyrene, and engineering plastics such as polybutylene terephthalate, nylon, polycarbonate, and polyethylene terephthalate. Preferred among these is at least one selected from the group consisting of low-density polyethylene, high-density polyethylene, polypropylene, and polystyrene.

The lower limit of the amount of the base resin in the masterbatch for foam molding of the present invention is preferably 30% by weight, and the upper limit thereof is preferably 80% by weight. When the amount of the base resin is 30% by weight or more, foaming during preparation of the masterbatch can be prevented. When the amount of the base resin is 80% by weight or less, a desired expansion ratio can be achieved. The lower limit of the amount of the base resin is more preferably 40% by weight, and the upper limit thereof is more preferably 75% by weight.

The masterbatch for foam molding of the present invention preferably contains a component derived from methyl methacrylate in both the thermally expandable microcapsule and the base resin.

Preferably, the amount of the component derived from methyl methacrylate in the shell of the thermally expandable microcapsule is 15 to 25% by weight, and the amount of the component derived from methyl methacrylate in the base resin is 3 to 25% by weight.

The masterbatch for foam molding of the present invention contains a thermally expandable microcapsule.

The lower limit of the amount of the thermally expandable microcapsule in the masterbatch for foam molding of the present invention is preferably 20% by weight, and the upper limit thereof is preferably 70% by weight. When the amount of the thermally expandable microcapsule is 20% by weight or more, a desired expansion ratio can be achieved. When the amount of the thermally expandable microcapsule is 70% by weight or less, foaming during preparation of the masterbatch can be prevented, resulting in improvement of the expansion ratio of the foam molded article. The lower limit of the amount of the thermally expandable microcapsule is more preferably 25% by weight, and the upper limit thereof is more preferably 60% by weight, still more preferably 55% by weight.

The shell constituting the thermally expandable microcapsule preferably contains a polymer obtained by polymerizing a monomer mixture containing a polymerizable monomer (I) including at least one selected from acrylonitrile, methacrylonitrile, and vinylidene chloride.

Addition of the polymerizable monomer (I) leads to improvement of the gas barrier properties of the shell.

In order to further improve the heat resistance, the shell constituting the thermally expandable microcapsule preferably contains a polymer obtained by polymerizing a monomer mixture containing 40 to 90% by weight of the polymerizable monomer (I) and 5 to 50% by weight of a C3-C8 radically polymerizable unsaturated carboxylic acid monomer (II) having a carboxy group.

The lower limit of the amount of the polymerizable monomer (I) in the monomer mixture is preferably 40% by weight, and the upper limit thereof is preferably 90% by weight. When the amount of the polymerizable monomer (I) in the monomer mixture is less than 40% by weight, the gas barrier properties of the shell are lowered, which may lower the expansion ratio. When the amount of the polymerizable monomer (I) in the monomer mixture is more than 90% by weight, the heat resistance may not be improved. The lower limit of the amount of the polymerizable monomer (I) in the monomer mixture is more preferably 50% by weight, and the upper limit thereof is more preferably 80% by weight.

The C3-C8 radically polymerizable unsaturated carboxylic acid monomer (II) having a carboxy group may be, for example, one having one or more free carboxy groups per molecule for ionic crosslinking. Specific examples thereof include: unsaturated monocarboxylic acids; unsaturated dicarboxylic acids and anhydrides thereof; and unsaturated dicarboxylic acid monoesters and derivatives thereof.

Examples of the unsaturated monocarboxylic acids include acrylic acid, methacrylic acid, ethacrylic acid, crotonic acid, and cinnamic acid. Examples of the unsaturated dicarboxylic acids include maleic acid, itaconic acid, fumaric acid, citraconic acid, and chloromaleic acid. Examples of the unsaturated dicarboxylic acid monoesters include monomethyl maleate, monoethyl maleate, monobutyl maleate, monomethyl fumarate, monoethyl fumarate, monomethyl itaconate, monoethyl itaconate, and monobutyl itaconate. These may be used alone or in combination of two or more. Particularly preferred among them are acrylic acid, methacrylic acid, maleic acid, maleic anhydride, and itaconic acid.

The lower limit of the amount of a segment derived from the C3-C8 radically polymerizable unsaturated carboxylic acid monomer (II) having a carboxy group in the monomer mixture is preferably 5% by weight, and the upper limit thereof is preferably 50% by weight. When the amount of the segment derived from the radically polymerizable unsaturated carboxylic acid monomer (II) is less than 5% by weight, the maximum foaming temperature may be 190°C or lower. When the amount of the segment derived from the radically polymerizable unsaturated carboxylic acid monomer (II) is more than 50% by weight, the maximum foaming temperature is raised but the expansion ratio is lowered. The lower limit of the amount of the segment derived from the radically polymerizable unsaturated carboxylic acid monomer (II) is more preferably 10% by weight, and the upper limit thereof is more preferably 40% by weight.

The monomer mixture may be any monomer mixture that contains the polymerizable monomer (I) and the segment derived from the C3-C8 radically polymerizable unsaturated carboxylic acid monomer (II) having a carboxy group each in an amount within the range described above. Preferably, any of the following monomer mixtures (1) to (3) is used.

The monomer mixture (1) contains 40 to 90% by weight of the polymerizable monomer (I) and 5 to 50% by weight of the C3-C8 radically polymerizable unsaturated carboxylic acid monomer (II) having a carboxy group, and does not contain a polymerizable monomer (III) having two or more double bonds in the molecule.

The monomer mixture (1) does not contain the polymerizable monomer (III) having two or more double bonds in the molecule. The polymerizable monomer (III) is generally used as a crosslinking agent.

Use of a monomer mixture containing the polymerizable monomer (I) and the radically polymerizable unsaturated carboxylic acid monomer (II) each in a predetermined amount, as the monomer mixture (1), leads to a shell having sufficient strength. As a result, even when the monomer mixture does not contain the polymerizable monomer (III) having two or more double bonds in the molecule, the thermally expandable microcapsule obtained has excellent shear resistance, excellent heat resistance, and excellent expandability. How such sufficient strength is achieved is not clear, but presumably, crosslinking by a dehydration condensation reaction between carboxy groups contributes thereto.

When the polymerizable monomer (III) is added, the thermally expandable microcapsule has particle shape distortion, resulting in a decrease in bulk specific gravity. When the bulk specific gravity decreases, the thermally expandable microcapsule is likely to be sheared in the following step, especially when a masterbatch is produced by extrusion molding, and the heat-expandable microcapsule tends to expand. As a result, a stable masterbatch cannot be produced due to the factors including a decrease in true specific gravity of the masterbatch. In subsequent foam molding of such a masterbatch by injection molding or the like, the expansion ratio is likely to vary.

Thus, the monomer mixture (1) can provide a thermally expandable microcapsule having sufficient strength and sufficient heat resistance, without containing the polymerizable monomer (III) having two or more double bonds in the molecule. The sentence "the monomer mixture does not contain the polymerizable monomer (III) having two or more double bonds in the molecule" herein means that the polymerizable monomer (III) is not substantially contained. When the polymerizable monomer (III) is contained only in a very small amount, such a monomer mixture is regarded as not containing the polymerizable monomer (III).

Examples of the polymerizable monomer (III) include monomers having two or more radically polymerizable double bonds. Specific examples thereof include divinyl benzene, ethylene glycol di(meth)acrylate, diethylene glycol di(meth)acrylate, triethylene glycol di(meth)acrylate, propylene glycol di(meth)acrylate, and 1,4-butanediol di(meth)acrylate. Examples also include 1,6-hexanediol di(meth)acrylate, 1,9-nonanediol di(meth)acrylate, di(meth)acrylate of polyethylene glycol having a molecular weight of 200 to 600, glycerol di(meth)acrylate, and trimethylolpropane di(meth)acrylate.

Examples further include trimethylolpropane tri(meth)acrylate, ethylene oxide-modified trimethylolpropane tri(meth)acrylate, pentaerythritol tri(meth)acrylate, and triallylformal tri(meth)acrylate.

Examples further include pentaerythritol tetra(meth)acrylate, dipentaerythritol hexa(meth)acrylate, and dimethylol-tricyclodecane di(meth)acrylate.

The monomer mixture (2) contains 40 to 90% by weight of the polymerizable monomer (I), 5 to 50% by weight of the C3-C8 radically polymerizable unsaturated carboxylic acid monomer (II) having a carboxy group, 0.2% by weight

**EP 4 386 044 A1**

or less of the polymerizable monomer (III), and 0.1 to 10% by weight of a metal cation hydroxide (IV).

The monomer mixture (2) preferably contains the polymerizable monomer (III) having two or more double bonds in the molecule. The polymerizable monomer (III) serves as a crosslinking agent.

When the monomer mixture (2) contains the polymerizable monomer (III), the shell strength can be enhanced, and the cell walls are less likely to break during thermal expansion.

The polymerizable monomer (III) may be any monomer that is different from the C3-C8 radically polymerizable unsaturated carboxylic acid monomer (II) having a carboxy group. Generally, a monomer having two or more radically polymerizable double bonds is suitably used. Specific examples thereof include divinyl benzene, ethylene glycol di(meth)acrylate, diethylene glycol di(meth)acrylate, triethylene glycol di(meth)acrylate, propylene glycol di(meth)acrylate, and 1,4-butanediol di(meth)acrylate, and 1,6-hexanediol di(meth)acrylate.

The examples also include 1,9-nonanediol di(meth)acrylate, di(meth)acrylate of polyethylene glycol having a molecular weight of 200 to 600, glycerol di(meth)acrylate, and trimethylolpropane di(meth)acrylate.

The examples further include trimethylolpropane tri(meth)acrylate, ethylene oxide-modified trimethylolpropane tri(meth)acrylate, pentaerythritol tri(meth)acrylate, pentaerythritol tetra(meth)acrylate, and dipentaerythritol hexa(meth)acrylate.

The upper limit of the amount of the polymerizable monomer (III) in the monomer mixture (2) is preferably 0.2% by weight. When the polymerizable monomer (III) is added in an amount exceeding 0.2% by weight, the thermally expandable microcapsule has particle shape distortion, resulting in a decrease in bulk specific gravity. When the bulk specific gravity decreases, the thermally expandable microcapsule is likely to be sheared in the following step, especially when a masterbatch is produced by extrusion molding, and the thermally expandable microcapsule tends to expand. As a result, a stable masterbatch cannot be prepared due to the factors including a decrease in true specific gravity of the masterbatch. In subsequent foam molding of such a masterbatch by injection molding or the like, the expansion ratio is likely to vary. In the present invention, setting the amount of the polymerizable monomer (III) to 0.2% by weight or less can prevent a decrease in bulk specific gravity. The lower limit of the amount of the polymerizable monomer (III) is preferably 0% by weight, and the upper limit thereof is more preferably 0.1% by weight.

The monomer mixture (2) preferably contains a metal cation hydroxide (IV).

When the monomer mixture (2) contains the metal cation hydroxide (IV), the metal cation hydroxide (IV) reacts with the carboxy group of the radically polymerizable unsaturated carboxylic acid monomer (II) to form an ionic bond, which can increase the rigidity and heat resistance. This results in a thermally expandable microcapsule that neither breaks nor shrinks over a long period of time in a high-temperature range. In addition, the modulus of elasticity of the shell is not likely to decrease even in a high-temperature range, so that the thermally expandable microcapsule neither breaks nor shrinks during molding processing in which strong shear force is applied, such as kneading molding, calendar molding, extrusion molding, or injection molding.

Because of formation of an ionic bond rather than a covalent bond, the particle shape of the thermally expandable microcapsule is nearly spherical and is less prone to distortion. The reason for this is presumably as follows. Since crosslinking by an ionic bond has a weaker binding force than crosslinking by a covalent bond, the thermally expandable microcapsule shrinks uniformly when the volume of the thermally expandable microcapsule shrinks when the monomers are converted to polymers during polymerization.

The metal cation of the metal cation hydroxide (IV) may be any metal cation that reacts with the radically polymerizable unsaturated carboxylic acid monomer (II) to form an ionic bond. Examples include Na, K, Li, Zn, Mg, Ca, Ba, Sr, Mn, Al, Ti, Ru, Fe, Ni, Cu, Cs, Sn, Cr, and Pb. The metal cation needs to be a hydroxide as it is used to form an ionic bond with the radically polymerizable unsaturated carboxylic acid monomer (II). A chloride such as NaCl forms a weak ionic bond and therefore is not applicable here. Preferred among these are Ca, Zn, and Al ions, which are divalent to trivalent metal cations, and particularly preferred is a Zn ion. These metal cation hydroxides (IV) may be used alone or in combination of two or more.

The lower limit of the amount of the metal cation hydroxide (IV) in the monomer mixture (2) is preferably 0.1% by weight, and the upper limit thereof is preferably 10% by weight. When the amount of the metal cation hydroxide (IV) is less than 0.1% by weight, the effect of improving the heat resistance may not be achieved. When the amount of the metal cation hydroxide (IV) is more than 10% by weight, the expansion ratio may be significantly lowered. The lower limit of the amount of the metal cation hydroxide (IV) is more preferably 0.5% by weight, and the upper limit thereof is more preferably 5% by weight.

The monomer mixture (3) contains 40 to 90% by weight of the polymerizable monomer (I), 5 to 50% by weight of the C3-C8 radically polymerizable unsaturated carboxylic acid monomer (II) having a carboxy group, and 0.1 to 10% by weight of the metal cation hydroxide (IV), and does not contain the polymerizable monomer (III) having two or more double bonds in the molecule.

The monomer mixture (3) is characterized in that it does not contain the polymerizable monomer (III) having two or more double bonds in the molecule.

Since crosslinking by an ionic bond occurs between the radically polymerizable unsaturated carboxylic acid monomer (II) and the metal cation hydroxide (IV), even when the monomer mixture does not contain the polymerizable monomer (III) having two or more double bonds in the molecule, the resulting shell has sufficient strength and sufficient heat resistance. When the polymerizable monomer (III) is added, the thermally expandable microcapsule has particle shape distortion, resulting in a decrease in bulk specific gravity. When the bulk specific gravity decreases, shearing force is likely to be applied to the thermally expandable microcapsule in the following step, especially when a masterbatch is produced by extrusion molding, and the heat-expandable microcapsule tends to expand. As a result, a stable masterbatch cannot be produced due to the factors including a decrease in true specific gravity of the masterbatch. In subsequent foam molding of such a masterbatch by injection molding or the like, the expansion ratio is likely to vary.

In the case of the monomer mixture (3), crosslinking by an ionic bond is mainly formed and crosslinking by a covalent bond is reduced. This enables production of the thermally expandable microcapsule having sufficient strength and sufficient heat resistance without using the polymerizable monomer (III) having two or more double bonds in the molecule. The sentence "the monomer composition does not contain the polymerizable monomer (III) having two or more double bonds in the molecule" herein means that the polymerizable monomer (III) is not substantially contained. When the polymerizable monomer (III) is contained only in a very small amount, such a monomer mixture is regarded as not containing the polymerizable monomer (III).

In addition to the polymerizable monomer (I), the radically polymerizable unsaturated carboxylic acid monomer (II), and the like, a different monomer may be added to the monomer mixture. Examples of the different monomer include: acrylic acid esters such as methyl acrylate, ethyl acrylate, butyl acrylate, and dicyclopentenyl acrylate; methacrylic acid esters such as methyl methacrylate, ethyl methacrylate, butyl methacrylate, and isobornyl methacrylate; and vinyl monomers such as vinyl acetate and styrene. Any of these different monomers can be appropriately selected and used according to the properties required for the thermally expandable microcapsule. Suitably used among these are methyl methacrylate, ethyl methacrylate, and methyl acrylate. The amount of the different monomer in all the monomers constituting the shell is preferably less than 10% by weight. When the amount of the different monomer is 10% by weight or more, the gas barrier properties of the cell wall are lowered and the thermal expandability undesirably tends to be lowered.

A polymerization initiator is added to the monomer mixture to polymerize the monomers.

Examples of suitable polymerization initiators include dialkyl peroxides, diacyl peroxides, peroxy esters, peroxydicarbonates, and azo compounds.

Examples of the dialkyl peroxides include methyl ethyl peroxide, di-t-butyl peroxide, isobutyl peroxide, and dicumyl peroxide.

Examples of the diacyl peroxides include benzoyl peroxide, 2,4-dichlorobenzoyl peroxide, and 3,5,5-trimethylhexanoyl peroxide.

Examples of the peroxyesters include t-butyl peroxypivalate, t-hexyl peroxypivalate, t-butyl peroxyneodecanoate, t-hexyl peroxyneodecanoate, 1-cyclohexyl-1-methyl ethyl peroxyneodecanoate, and 1,1,3,3-tetramethylbutyl peroxyneodecanoate.

Examples of the peroxydicarbonates include bis(4-t-butylcyclohexyl)peroxydicarbonate, di-n-propyl-oxydicarbonate, diisopropyl peroxydicarbonate, di(2-ethylethylperoxy)dicarbonate, and dimethoxybutyl peroxydicarbonate.

Examples of the azo compounds include 2,2'-azobisisobutyronitrile, 2,2'-azobis(4-methoxy-2,4-dimethylvaleronitrile, 2,2'-azobis(2,4-dimethylvaleronitrile), and 1,1'-azobis(1-cyclohexanecarbonitrile).

The lower limit of the weight average molecular weight of the polymer contained in the shell is preferably 100,000, and the upper limit thereof is preferably 2,000,000. When the weight-average molecular weight is less than 100,000, the shell strength may decrease. When the weight-average molecular weight is more than 2,000,000, the shell strength may be too high, and the expansion ratio may decrease.

The shell may further contain additives such as a stabilizer, an ultraviolet absorber, an antioxidant, an antistatic agent, a flame retardant, a silane coupling agent, and a colorant, if necessary.

The thermally expandable microcapsule contains a volatile expansion agent as a core agent encapsulated by the shell.

The volatile expansion agent is a substance that becomes gaseous at a temperature not higher than the softening point of the polymer constituting the shell. The volatile expansion agent is preferably a low-boiling-point organic solvent.

Examples of the volatile expansion agent include low-molecular-weight hydrocarbons, chlorofluorocarbons, and tetraalkylsilanes.

Examples of the low-molecular-weight hydrocarbons include ethane, ethylene, propane, propene, n-butane, isobutane, butene, isobutene, n-pentane, isopentane, neopentane, n-hexane, heptane, isooctane, and petroleum ether.

Examples of the chlorofluorocarbons include $CCl_3F$, $CCl_2F_2$, $CClF_3$, and $CClF_2$-$CClF_2$.

Examples of the tetraalkylsilanes include tetramethylsilane, trimethylethylsilane, trimethylisopropylsilane, and trimethyl-n-propylsilane.

Preferred among these are isobutane, n-butane, n-pentane, isopentane, n-hexane, isooctane, petroleum ether, and mixtures of any of these. These volatile expansion agents may be used alone or in combination of two or more.

The volatile expansion agent used may be a heat-decomposable compound that is heat-decomposed into a gaseous form by heat.

For the thermally expandable microcapsule, a low-boiling-point hydrocarbon having 5 or less carbon atoms is preferably used among the above volatile expansion agents. Use of such a hydrocarbon enables production of a thermally expandable microcapsule that has a high expansion ratio and starts expanding quickly.

The volatile expansion agent used may be a heat-decomposable compound that is heat-decomposed into a gaseous form by heat.

In the masterbatch for foam molding of the present invention, the lower limit of the amount of the volatile expansion agent used as a core agent is preferably 10% by weight, and the upper limit thereof is preferably 25% by weight.

The shell thickness varies depending on the amount of the core agent. When the amount of the core agent is reduced and the shell becomes too thick, the foamability decreases. When the amount of the core agent is increased, the shell strength decreases. When the amount of the core agent is 10 to 25% by weight, prevention of settling of the thermally expandable microcapsule and improvement of foamability can be both achieved.

The lower limit of the maximum foaming temperature (Tmax) of the thermally expandable microcapsule is preferably 180°C and the upper limit thereof is preferably 230°C. When the maximum foaming temperature is lower than 180°C, the heat resistance decreases, so that the thermally expandable microcapsule breaks or shrinks in a high temperature range or during molding. Moreover, foaming due to shearing occurs during the production of a masterbatch, and an unfoamed masterbatch cannot be produced stably. The lower limit of the maximum foaming temperature is more preferably 190°C.

The maximum foaming temperature as used herein means a temperature at which the thermally expandable microcapsule reaches its maximum diameter (maximum displacement) when the diameter is measured while the microcapsule is heated from room temperature.

The lower limit of the maximum displacement (Dmax) of the thermally expandable microcapsule as measured by thermomechanical analysis is preferably 300 um and the upper limit thereof is preferably 1,200 $\mu$m.

The maximum displacement means the value of displacement at which a predetermined amount of thermally expandable microcapsules as a whole reaches the maximum diameter when the diameter of the predetermined amount of thermally expandable microcapsules is measured while the microcapsules are heated from room temperature.

The lower limit of the foaming starting temperature (Ts) is preferably 160°C and the upper limit thereof is preferably 200°C.

The maximum foaming temperature herein means a temperature at which a thermally expandable microcapsule reaches its maximum displacement when the diameter is measured while the thermally expandable microcapsule is heated from room temperature.

The lower limit of the average particle size of the thermally expandable microcapsule is preferably 15 um and the upper limit thereof is preferably 25 um. When the average particle size is 15 um or more, the resulting molded article is sufficiently foamed. When the average particle size is 25 $\mu$m or less, the strength of the resulting molded article is sufficient. The lower limit of the average particle size is more preferably 18 pm, and the upper limit thereof is more preferably 23 um.

The average particle size of the thermally expandable microcapsule means the volume average particle size measured using a particle size distribution analyzer.

In determination of the average particle size of a thermally expandable microcapsule present in a masterbatch, the thermally expandable microcapsule is cut using a single-edged razor, and the cross-sectional diameters of 20 or more thermally expandable microcapsule particles in the cross sections are measured by a scanning electron microscope (SEM). The average value of the top 80% cross-sectional diameters is taken as the average particle size of the thermally expandable microcapsule.

The lower limit of the true specific gravity of the thermally expandable microcapsule is preferably 0.95 g/cm$^3$. When the true specific gravity is 0.95 g/cm$^3$ or more, a highly foamed molded article can be obtained.

The lower limit of the true specific gravity is more preferably 1.0 g/cm$^3$, and the upper limit thereof is more preferably 1.10 g/cm$^3$.

The true specific gravity refers to the specific gravity of the material alone, excluding pores, and represents the ratio between the mass of a unit volume of the thermally expandable microcapsule and the mass of water of the same volume at 4°C. The true specific gravity can be measured by a method in conformity with the A method of JIS K 7112 (water substitution method).

A method for producing the thermally expandable microcapsule includes, for example: preparing an aqueous medium; dispersing, in the aqueous medium, an oily mixture liquid containing 40 to 90% by weight of the polymerizable monomer (I), 5 to 50% by weight of the C3-C8 radically polymerizable unsaturated carboxylic acid monomer (II) having a carboxy group, and a volatile expansion agent; and polymerizing the monomers.

In production of the thermally expandable microcapsule, the step of preparing an aqueous medium is first carried out. Specifically, for example, an aqueous dispersion medium containing a dispersion stabilizer is prepared by adding water, a dispersion stabilizer, and optionally an auxiliary stabilizer to a polymerization reactor. If necessary, alkali metal nitrite, stannous chloride, stannic chloride, potassium dichromate, or the like may also be added.

Examples of the dispersion stabilizer include silica, calcium phosphate, magnesium hydroxide, aluminum hydroxide, ferric hydroxide, barium sulfate, calcium sulfate, sodium sulfate, calcium oxalate, calcium carbonate, calcium carbonate, barium carbonate, and magnesium carbonate.

The amount of the dispersion stabilizer to be added is not limited, and is appropriately determined according to the type of the dispersion stabilizer, the particle size of the thermally expandable microcapsule, and the like. The lower limit of the amount is preferably 0.1 parts by weight and the upper limit thereof is preferably 20 parts by weight, relative to 100 parts by weight of the monomers.

Examples of the auxiliary stabilizer include a condensation product of diethanolamine and an aliphatic dicarboxylic acid, and a condensation product of urea and formaldehyde. Examples also include polyvinylpyrrolidone, polyethylene oxide, polyethyleneimine, tetramethylammonium hydroxide, gelatin, methylcellulose, polyvinyl alcohol, dioctylsulfosuccinate, sorbitan esters, and various emulsifiers.

The combination of the dispersion stabilizer and the auxiliary stabilizer is not limited. Examples thereof include a combination of colloidal silica and a condensation product, a combination of colloidal silica and a water-soluble nitrogen-containing compound, and a combination of an emulsifier and magnesium hydroxide or calcium phosphate. Preferred among these is a combination of colloidal silica and a condensation product.

The condensation product is preferably a condensation product of diethanolamine and an aliphatic dicarboxylic acid, particularly preferably a condensation product of diethanolamine and adipic acid or a condensation product of diethanolamine and itaconic acid.

Examples of the water-soluble nitrogen-containing compound include polyvinylpyrrolidone, polyethyleneimine, polyoxyethylenealkylamine, polydialkylaminoalkyl(meth)acrylates, polydialkylaminoalkyl(meth)acrylamides, polyacrylamide, polycationic acrylamide, polyamine sulfone, and polyallylamine.

Examples of the polydialkylaminoalkyl (meth)acrylates include polydimethylaminoethyl methacrylate and polydimethylaminoethyl acrylate.

Examples of the polydialkylaminoalkyl (meth)acrylamides include polydimethylaminopropylacrylamide and polydimethylaminopropylmethacrylamide. Among these, polyvinylpyrrolidone is suitably used.

The amount of the colloidal silica to be added is appropriately determined according to the particle size of the thermally expandable microcapsule. The lower limit of the amount is preferably 1 part by weight and the upper limit thereof is preferably 20 parts by weight, relative to 100 parts by weight of the vinyl monomer. The lower limit of the amount of the colloidal silica to be added is more preferably 2 parts by weight, and the upper limit thereof is more preferably 10 parts by weight. The amount of the condensation product or water-soluble nitrogen-containing compound to be added is also appropriately determined according to the particle size of the thermally expandable microcapsule. The lower limit of the amount is preferably 0.05 parts by weight and the upper limit thereof is preferably 2 parts by weight, relative to 100 parts by weight of the monomers.

In addition to the dispersion stabilizer and the auxiliary stabilizer, an inorganic salt such as sodium chloride and sodium sulfate may be further added. Addition of an inorganic salt allows the thermally expandable microcapsule to have a more uniform particle shape. The amount of the inorganic salt to be added is usually preferably 0 to 100 parts by weight relative to 100 parts by weight of the monomers.

The aqueous dispersion medium containing the dispersion stabilizer is prepared by mixing the dispersion stabilizer and the auxiliary stabilizer in deionized water. The pH of the aqueous phase at this time is appropriately determined according to the types of the dispersion stabilizer and auxiliary stabilizer used. For example, when the dispersion stabilizer used is a silica such as colloidal silica, an acidic medium is used for polymerization. The aqueous medium may be made acidic by optionally adding an acid such as hydrochloric acid to adjust the system to a pH of 3 to 4. When the dispersion stabilizer used is magnesium hydroxide or calcium phosphate, an alkaline medium is used for polymerization.

In the method of producing the thermally expandable microcapsule, next, the step of dispersing, in the aqueous medium, an oily mixture liquid containing 40 to 90% by weight of the polymerizable monomer (I), 5 to 50% by weight of the C3-C8 radically polymerizable unsaturated carboxylic acid monomer (II) having a carboxy group, and a volatile expansion agent is performed. In this step, the monomers and the volatile expansion agent may be separately added to the aqueous dispersion medium to prepare an oily mixture liquid in the aqueous dispersion medium. Typically, however, they are mixed in advance to form the oily mixture liquid, and the obtained oily mixture liquid is added to the aqueous dispersion medium. In this case, the oily mixture liquid and the aqueous dispersion medium may be prepared in separate containers in advance, mixed in another container with stirring to disperse the oily mixture liquid in the aqueous dispersion medium, and then added to the polymerization reaction vessel.

The monomers are polymerized using a polymerization initiator. The polymerization initiator may be added to the oily mixture liquid in advance, or may be added after the aqueous dispersion medium and the oily mixture liquid are mixed with stirring in the polymerization reaction vessel.

The oily mixture liquid may be emulsified and dispersed to have a predetermined particle size in the aqueous dispersion medium by, for example, a method including stirring with a homogenizer (e.g., product of Tokushu Kika Kogyo Co., Ltd.), or a method including passing the oily mixture liquid and the aqueous dispersion medium through a static dispersion apparatus such as a line mixer or an element-type static dispersion machine.

Here, the aqueous dispersion medium and the polymerizable mixture may be separately fed to the static dispersion apparatus, or a dispersion obtained by mixing and stirring them in advance may be fed to the dispersion apparatus.

The thermally expandable microcapsule can be produced by performing, for example, the step of polymerizing the monomers by heating the dispersion obtained through the above steps. The thermally expandable microcapsule produced by such a method has a high maximum foaming temperature and excellent heat resistance, and neither breaks nor shrinks in a high temperature range or during molding. Moreover, since having a high bulk specific gravity, the thermally expandable microcapsule does not expand due to shearing during the production of a masterbatch, so that an unfoamed masterbatch can be produced stably.

The masterbatch for foam molding of the present invention may contain a chemical foaming agent. When the masterbatch contains the chemical foaming agent such as sodium hydrogen carbonate, for example, the foamability can be improved owing to $CO_2$ generated during decomposition of the chemical foaming agent. Use of the thermally expandable microcapsule and the chemical foaming agent in combination can suppress formation of open cells that tend to be formed when the chemical foaming agent is used alone.

The chemical foaming agent may be any chemical forming agent that is powdery at room temperature, and a conventionally widely used chemical foaming agent can be used. Specific examples include: inorganic chemical foaming agents such as sodium hydrogen carbonate; and organic foaming agents such as azodicarbonamide, N,N'-dinitrosopentamethylenetetramine, P,P'-oxybisbenzenesulfonyl hydrazide, and paratoluenesulfonyl hydrazide.

The masterbatch for foam molding of the present invention may contain additives such as a lubricant. When the masterbatch for foam molding of the present invention contains the lubricant, the shear applied to the thermally expandable microcapsule during the production of the masterbatch is reduced, so that microfoaming or the like is less likely to occur. Also, the dispersibility of the thermally expandable microcapsule is improved, facilitating the production of the masterbatch. As a result, a masterbatch having a high thermally expandable microcapsule concentration can be produced stably with high production efficiency.

The lubricant may be any conventionally widely used lubricant that melts at the temperature during the production of the masterbatch. Specific examples include a polyethylene wax having a viscosity average molecular weight of 3,000 or less, glycerol fatty acid esters such as glycerol monostearate and diglycerol stearate, fatty acids such as stearic acid, and those called composite lubricants.

The method for producing the masterbatch for foam molding of the present invention is not limited. An exemplary method includes: mixing a base resin and a thermally expandable microcapsule; cooling strands resulting from the mixing step; and cutting the strands after the cooling step (cold cut method).

Another exemplary method may include, after the mixing step, cutting the strands without performing the cooling step (hot cut method). In still another exemplary method, the cooling step and the cutting step may be performed after extruding the strands into a sheet (sheet cut method).

In the mixing step, two or more different feeders are connected to a supply port of an extruder, and the base resin and the thermally expandable microcapsule are separately fed into the extruder from the feeders and mixed by kneading in the extruder. Alternatively, they may be mixed in advance and then fed to the extruder.

The extruder used in the mixing step may be, for example, one having a feed port, a vent, a screw, a temperature control unit, and a discharge port (head).

The extruder may employ various extrusion methods such as single screw extrusion, twin screw extrusion, or multi-screw extrusion. Preferably, a twin-screw extruder is used. Examples of the twin screw extruder include counter-rotating twin screw extruders and co-rotating twin screw extruders (conical type and parallel type). In the production method of the present invention, preferred is a co-rotating twin screw extruder (either conical type or parallel type).

In the mixing step, preferably, the inside of the extruder is purged with an inert gas such as nitrogen, or the extruder is deaerated with a single-stage or multistage vent (i.e., the vent is opened). Further, the extruder may be forcibly deaerated by vacuuming with the vent.

In the mixing step, the cylinder temperature of the extruder is preferably set in the range of 90°C to 110°C. The temperature in the region close to the portion where the raw materials are added of the extruder is preferably set within the above range.

The number of rotations of the screws in the mixing step is preferably set within the range of 270 to 330 rpm (in this case, the discharge amount is about 100 kg/hour).

The strands are cooled in the cooling step by an air cooling method or a water cooling method. Preferably, the strands are cooled by a water cooling method.

When the water cooling method is employed, a drainer or a dryer is desirably introduced at a position before the pelletizer for cutting the strands for the purpose of removing water on the strands.

An exemplary water cooling cooling method includes conveying strands in the direction toward a cutter while bringing the strands into contact with water to cool the strands.

The submersion distance (water cooling distance) in the water cooling cooling method is preferably 60 to 200 cm when the discharge amount is around 100 kg. The strand take-up speed is preferably about 0.2 to 0.6 m/s.

In the cutting step, the cooled strands are cut at appropriate intervals with a strand cutter or the like into pellets. The strand cutter is not limited and may be appropriately selected according to the purpose.

The properties of the masterbatch for foam molding of the present invention (e.g., porosity with a pore size of 0.001 um or more/interfacial area per unit weight, and volatile content) can be appropriately controlled by the compositions and content percentages of the base resin, the thermally expandable microcapsule, and the lubricant added optionally.

Further, the properties of the masterbatch for foam molding of the present invention can be also appropriately controlled by the temperature in the extruder in the mixing step, opening/closing of the vent, the submersion distance in the cooling step, and the like.

A resin composition prepared by adding a matrix resin such as a thermoplastic resin to the masterbatch for foam molding of the present invention is molded by a molding method such as injection molding, and then foamed by the thermally expandable microcapsule with heating during molding. Thus, a foam molded article can be produced. Such a foam molded article is also encompassed by the present invention.

The foam molded article of the present invention obtained by such a method has a high expansion ratio and high appearance quality, includes uniformly formed closed cells, and is excellent in properties including lightness, heat insulation, impact resistance, and rigidity. Such foam molded article can be suitably used for applications such as housing materials, automobile parts, and shoe soles.

The matrix resin such as a thermoplastic resin may be any resin that does not interfere with the aim of the present invention. Examples include general thermoplastic resins such as polyvinyl chloride, polystyrene, polypropylene, polypropylene oxide, and polyethylene. Examples also include engineering plastics such as polybutylene terephthalate, nylon, polycarbonate, and polyethylene terephthalate. Also usable are thermoplastic elastomers such as ethylene elastomers, vinyl chloride elastomers, olefin elastomers, urethane elastomers, and ester elastomers. These resins may be used in combination. The matrix resin used is preferably the same resin as the base resin.

The amount of the masterbatch for foam molding of the present invention to be added is preferably 0.5 to 20 parts by weight, more preferably 1 to 10 parts by weight, relative to 100 parts by weight of the thermoplastic resin.

The method for molding the foam molded article of the present invention is not limited. Examples of the molding method include knead molding, calendar molding, extrusion molding, and injection molding. The injection molding may be performed by any method. Examples of the method include a short shot method, in which part of a resin material is placed in a mold and foamed, and a core back method, in which a mold is fully filled with a resin material and then opened enough to achieve a desired foam size.

Examples of applications of the molded article obtained by the method for molding the foam molded article of the present invention include automotive interior materials such as door trims and instrument panels, and automotive exterior materials such as bumpers. Other applications include building materials such as wood plastic composites, shoe soles, and artificial cork.

- Advantageous Effects of Invention

The present invention can provide a masterbatch for foam molding from which a foam molded article capable of maintaining foaming over time and having less excessive foaming can be produced. The present invention can also provide a foam molded article produced using the masterbatch for foam molding.

DESCRIPTION OF EMBODIMENTS

The present invention will be described in more detail with reference to, but not limited to, the following examples.

(Production of thermally expandable microcapsules)

To a polymerization reaction vessel were added 300 parts by weight of water, 89 parts by weight of sodium chloride as a modifier, 0.07 parts by weight of sodium nitrite as a water-soluble polymerization inhibitor, and 8 parts by weight of colloidal silica (available from Asahi Denka Co., Ltd.) and 0.3 parts by weight of polyvinylpyrrolidone (available from DKS Co., Ltd.) as dispersion stabilizers. Thus, an aqueous dispersion medium was prepared. Next, to the aqueous dispersion medium was added an oily mixture liquid containing a metal salt, monomers, a volatile expansion agent, and a polymerization initiator each in an amount as shown in Table 1, followed by mixing. Thus, a dispersion liquid was prepared. The whole dispersion liquid weighed 15 kg. The resulting dispersion liquid was stirred and mixed with a homogenizer, charged into a nitrogen-purged pressure polymerization vessel (20 L), pressurized (at 0.2 MPa), and reacted at 60°C for 20 hours. Thus, a reaction product was prepared. The resulting reaction product was subjected to repetitive dehydration and washing with water using a centrifuge, and then dried. Thus, thermally expandable microcapsules (Nos. 1 to 4) were obtained.

In Table 1, the polymerizable monomer (I) is defined as Monomer (I), the radically polymerizable unsaturated carboxylic acid monomer (II) is defined as Monomer (II), and the polymerizable monomer (III) is defined as Monomer (III) .

(Example 1)

(Preparation of masterbatch pellets)

A mixture was prepared by adding and mixing 68 parts by weight of low-density polyethylene (LDPE, Petrothene 248 available from Tosoh Corporation) as a base resin, 4 parts by weight of a fatty acid ester as a lubricant, and 28 parts by weight of the thermally expandable microcapsule obtained. The resulting mixture was supplied to a twin-screw extruder (TEM48SS, available from Toshiba Machine Co., Ltd., co-rotating type). Then, kneading was performed with the cylinder temperatures of the regions (C2 part, C3 part) close to the part where the raw materials were added set to 98°C for the C2 part and 99°C for the C3 part. Extrusion was performed with the vent installed in the extruder opened. Then, the extruded strands were conveyed in the direction toward a cutter while they were brought into contact with water for cooling (submersion distance: 80 cm). The strands were then cut with a strand cutter into pellets. Thus, masterbatch pellets were obtained.

(Production of foam molded article)

Three parts by weight of the masterbatch pellets obtained and 100 parts by weight of an olefin elastomer (TPO, Milastomer 7030BS available from Mitsui Chemicals Inc.) were mixed, and the resulting pellet mixture was supplied to a hopper of an extruder, melt-kneaded, and extrusion-molded. Thus, a sheet foam molded article was obtained. The extrusion condition set was a mold temperature of 190°C.

(Examples 2 to 10, Comparative Examples 1 to 5)

(Preparation of masterbatch pellets)

Masterbatch pellets and a foam molded article was produced as in Example 1, except that the types and amounts of the thermally expandable microcapsule, base resin, and lubricant used were set as shown in Table 2 and the extruder temperature, opening/closing of the vent, and submersion distance were adjusted as shown in Table 2. EMMA in Table 2 represents an ethylene-methyl methacrylate copolymer (Acryft CM5021 available from Sumitomo Chemical Co., Ltd.). Acryft CM5021 has an MMA content of 28% by weight and a melt index of 450 g/10 min. The melt index was measured by the measuring method specified in JIS K7210-1.

(Evaluation)

The thermally expandable microcapsules (Nos. 1 to 4) and the molded articles obtained in Examples 1 to 10 and Comparative Examples 1 to 5 were evaluated for the following properties. The results are shown in Tables 1 and 2.

(1) Evaluation of thermally expandable microcapsules

(1-1) Volume average particle size

The volume average particle size was measured using a particle size distribution analyzer (LA-910, available from HORIBA Ltd.).

(1-2) Foaming starting temperature, maximum foaming temperature, maximum displacement

The foaming starting temperature (Ts), the maximum displacement (Dmax), and the maximum foaming temperature (Tmax) were measured with a thermomechanical analyzer (TMA) (TMAQ400, available from TA Instruments). Specifically, 25 pg of a sample was placed in an aluminum container having a diameter of 7 mm and a depth of 1 mm and heated at a temperature increase rate of 5°C/min from 80°C to 250°C with a force of 0.1 N applied from above. The displacement was measured in the perpendicular direction of a measuring terminal. The temperature at which the displacement began to increase was defined as the foaming starting temperature. The maximum value of the displacement was defined as the maximum displacement. The temperature at which the maximum displacement was obtained was defined as the maximum foaming temperature.

(1-3) True specific gravity

An amount of 2.7 to 2.8 g of each thermally expandable microcapsule obtained was placed in a dry automatic densitometer (AccuPyc II 1340, available from Shimadzu Corporation) to measure the true specific gravity (pressurized to 0.15 to 0.18 MPa with air).

[Table 1]

| Thermally expandable microcapsule No. | | | | (1) | (2) | (3) | (4) |
|---|---|---|---|---|---|---|---|
| Thermally expandable microcapsule | Amount (parts by weight) | Monomer (I) | Acrylonitrile | 20 | 20 | 28 | 20 |
| | | | Methacrylonitrile | 30 | 30 | 42 | 30 |
| | | Monomer (II) | Methacrylic acid | 30 | 30 | 29.9 | 30 |
| | | Monomer (III) | Trimethylolpropane triacrylate | 0 | 0 | 0 | 0 |
| | | Metal salt (IV) | Zinc hydroxide | 0.15 | 0.15 | 0 | 0.3 |
| | | Different monomer | Methyl methacrylate | 20 | 20 | 0.1 | 20 |
| | | Volatile expansion agent | Isopentane | 23.8 | 17 | 0 | 0 |
| | | | n-Pentane | 0 | 0 | 29.8 | 0 |
| | | | Isooctane | 6 | 4.3 | 0 | 29.8 |
| | | Polymerization initiator | 2,2'-Azobisisobutyronitrile | 0.8 | 0.8 | 0.8 | 0.8 |
| | | | 2,2'-Azobis(4-methoxy-s,4-dimethylvaleronitrile) | 0.6 | 0.6 | 0.6 | 0.6 |
| | Average particle size (μm) | | | 25 | 19 | 27.3 | 28.5 |
| | Foaming starting temperature (Ts) (°C) | | | 169 | 174 | 165 | 215 |
| | Maximum foaming temperature (Tmax) (°C) | | | 214 | 202 | 209 | 224 |
| | Maximum displacement (Dmax) (μm) | | | 891 | 435 | 1386 | 895 |
| | True specific gravity (g/cm³) | | | 1.028 | 1.037 | 1.043 | 1.062 |

(2) Evaluation of masterbatch pellets

(2-1) Porosity, average pore size

The porosity and the average pore size of the masterbatch pellets obtained were measured by a mercury intrusion method using a porosimeter (Thermo Pascal 14B). Regarding the porosity, the volume percentage of pores with a pore size of 0.1 um or more (porosity with a pore size of 0.1 $\mu$m or more) and the volume percentage of pores with a pore size of 0.001 um or more (porosity with a pore size of 0.001 um or more) were measured.

(2-2) Interfacial area per unit weight

The interfacial area per unit weight was calculated using the volume average particle size and true specific gravity of the thermally expandable microcapsule and the thermally expandable microcapsule content of the masterbatch. Specifically, the following formula was used.

Interfacial area per unit weight (cm$^2$/g) = surface area per 1 g of thermally expandable microcapsule $\times$ thermally expandable microcapsule content of the masterbatch

The surface area per 1 g of thermally expandable microcapsule was calculated using the following formula.

Surface area per 1 g of thermally expandable microcapsule = surface area of one thermally expandable microcapsule particle $\times$ the number of thermally expandable microcapsules per 1 g Surface area of one thermally expandable microcapsule particle = $4 \times \pi \times$ (volume average particle size / 2)$^2$

The number of thermally expandable microcapsules per 1 g = 1/volume of one microcapsule particle/true specific gravity = 1/(4/3 $\times \pi \times$ (volume average particle size/2)$^3$)/true specific gravity

Also, the ratio of the porosity with a pore size of 0.001 $\mu$m or more to the interfacial area per unit weight (porosity with a pore size of 0.001 $\mu$m or more/interfacial area per unit weight) was calculated.

(2-3) Volatile content

About 10 g of the masterbatch was weighed into an aluminum cup, heated at 70°C for 60 minutes, allowed to cool to 40°C or below in a desiccator, and weighed. The volatile content was calculated by the following formula.

$$V = [(B - C)/(B - A)] \times 100$$

V: Volatile content (%)
A: Weight of aluminum cup (g)
B: Weight (g) of the aluminum cup containing the sample
C: Weight (g) of the aluminum cup containing the sample after heating and cooling

(2-4) Measurement of average outer size

Ten masterbatch pellets obtained were randomly taken, and the outer size of each was measured using a vernier caliper to calculate the average outer size.

(2-5) Particle size distribution (CV value)

The CV value was calculated using the following formula based on the average value and standard deviation of 10 samples obtained in (2-4) above.

$$CV\ value = (standard\ deviation/average\ value) \times 100$$

(2-6) Foaming retention rate

The foaming displacements after heating for 6 minutes and after heating for 8 minutes were determined. Based on these foaming displacements, the foaming retention rate was calculated. Methods for calculating the foaming displacement and foaming retention rate are shown below.

[Foaming displacement]

The masterbatch pellets obtained were weighed (0.25 ± 0.01 g) and put into a test tube ($\varphi$ = approximately 14 mm, Fisherbrand Cat. No. 141-961-29 or its equivalent). After heating the test tube for 6 minutes in an oven set at 200°C, the foaming height was measured, and the foaming displacement after heating for 6 minutes per 1 g of masterbatch pellets was calculated using the following formula. The foaming displacement after heating for 8 minutes was calculated in the same manner.

Foaming displacement (mm / g) = foaming height (mm) / pellet weight (g)

[Foaming retention rate]

Based on the obtained foaming displacements after heating for 6 minutes and after heating for 8 minutes, the foaming retention rate was calculated using the following formula.

Foaming retention rate (%) = (foaming displacement after heating for 8 minutes/foaming displacement after heating for 6 minutes) × 100

(3) Evaluation of molded article

(3-1) Cross-sectional state

The molded article was cut with a cutter, and the cross-sectional state was observed with a scanning electron microscope (JEOL JSM-6510A, available from JEOL Ltd.). The number of ruptured cells (broken foam cells) per unit area (1 cm$^2$) was counted.

(3-2) Surface roughness

The surface roughness (Rz) of the molded article was measured with a 3D profilometer (available from Keyence Corporation).

EP 4 386 044 A1

[Table 2]

| | | | | Example | | | | | | | | | | Comparative Example | | | | |
|---|---|---|---|---|---|---|---|---|---|---|---|---|---|---|---|---|---|---|
| | | | | 1 | 2 | 3 | 4 | 5 | 6 | 7 | 8 | 9 | 10 | 1 | 2 | 3 | 4 | 5 |
| Masterbatch | Raw material | Thermally expandable microcapsule | Type | (1) | (1) | (1) | (1) | (1) | (1) | (2) | (3) | (4) | (4) | (1) | (1) | (1) | (1) | (1) |
| | | | Amount (parts by weight) | 28 | 28 | 28 | 28 | 28 | 48 | 48 | 48 | 48 | 48 | 28 | 28 | 28 | 28 | 48 |
| | | Amount of base resin (parts by weight) | LDPE | 68 | 68 | 68 | 68 | 68 | 48 | 48 | 0 | 48 | 48 | 68 | 68 | 68 | 68 | 48 |
| | | | EMMA | 0 | 0 | 0 | 0 | 0 | 0 | 0 | 48 | 0 | 0 | 0 | 0 | 0 | 0 | 0 |
| | | Amount of lubricant (parts by weight) | | 4 | 4 | 4 | 4 | 4 | 4 | 4 | 4 | 4 | 4 | 4 | 4 | 4 | 4 | 4 |
| | Production conditions | Temperature of extruder (°C) | C2 part | 98 | 99 | 100 | 97 | 110 | 110 | 110 | 110 | 110 | 115 | 64 | 69 | 60 | 96 | 64 |
| | | | C3 part | 99 | 100 | 100 | 100 | 110 | 110 | 110 | 110 | 110 | 115 | 89 | 91 | 89 | 99 | 88 |
| | | Opening/closing of vent | | Open | Open | Open | Open | Open | Open | Open | Open | Open | Open | Close | Close | Close | Open | Close |
| | | Submersion distance (cm) | | 80 | 80 | 80 | 80 | 80 | 80 | 80 | 80 | 80 | 80 | 80 | 80 | 80 | 120 | 60 |
| Molded article | Raw material | Amount of masterbatch (parts by weight) | | 3 | 3 | 3 | 3 | 3 | 3 | 3 | 3 | 3 | 3 | 3 | 3 | 3 | 3 | 3 |
| | | Amount of matrix resin (parts by weight) | TPO | 100 | 100 | 100 | 100 | 100 | 100 | 100 | 100 | 100 | 100 | 100 | 100 | 100 | 100 | 100 |

18

| | | | Example | | | | | | | | | | Comparative Example | | | | |
|---|---|---|---|---|---|---|---|---|---|---|---|---|---|---|---|---|---|
| | | | 1 | 2 | 3 | 4 | 5 | 6 | 7 | 8 | 9 | 10 | 1 | 2 | 3 | 4 | 5 |
| Evaluation | Masterbatch | Interfacial area per unit weight (cm$^2$/g) | 672 | 672 | 672 | 672 | 672 | 1152 | 1600 | 960 | 1152 | 1152 | 672 | 672 | 672 | 672 | 1152 |
| | | Porosity with a pore size of 0.1 $\mu$m or more (%) | 1.0 | 2.6 | 3.2 | 0.3 | 1.9 | 5.6 | 1.6 | 1.6 | 2.2 | 2.0 | 5.4 | 4.8 | 4.6 | 1.5 | 6.6 |
| | | Porosity with a pore size of 0.001 $\mu$m or more (%) | 7.9 | 9.0 | 100 | 8.2 | 9.0 | 13.7 | 8.7 | 7.9 | 8.0 | 4.6 | 12.8 | 11.4 | 11.4 | 8.5 | 19.2 |
| | | Porosity with a pore size of 0.001 $\mu$m or more/ interfacial area per unit weight | 0.012 | 0.013 | 0.015 | 0.012 | 0.013 | 0.012 | 0.005 | 0.008 | 0.007 | 0.004 | 0.019 | 0.017 | 0.017 | 0.013 | 0.017 |
| | | Average pore size ($\mu$m) | 0.010 | 0.014 | 0.017 | 0.010 | 0.012 | 0.042 | 0.011 | 0.010 | 0.013 | 0.013 | 0.033 | 0.035 | 0.035 | 0.013 | 0.056 |
| | | Volatile content | 0.451 | 0.411 | 0.365 | 0.495 | 0.349 | 0.338 | 0.349 | 0.412 | 0.425 | 0.450 | 0.750 | 0.987 | 0.770 | 1.330 | 0.525 |
| | | Average outer size (mm) | 1.66 | 1.67 | 1.65 | 1.95 | 1.72 | 1.86 | 2.76 | 2.71 | 3.1 | 3.1 | 1.68 | 1.64 | 1.68 | 1.69 | 1.86 |
| | | Particle size distribution [CV value] (%) | 3.70 | 3.20 | 2.69 | 4.60 | 2.26 | 37.00 | 1.64 | 1.78 | 0.63 | 0.65 | 4.67 | 2.47 | 4.67 | 3.22 | 38.00 |
| | | Foaming retention rate (%) | 93.40 | 89.70 | 104.30 | 99.50 | 93.64 | 99.10 | 91.12 | 90.93 | 90.00 | 89.00 | 57.00 | 59.00 | 61.60 | 66.40 | 65.00 |
| | Molded article | Cross-sectional state, number of broken cells (pcs/cm$^2$) | 0 | 0 | 0 | 0 | 0 | 0 | 0 | 0 | 0 | 0 | 3 | 5 | 5 | 4 | 5 |
| | | Surface roughness ($\mu$m) | 3.60 | 4.50 | 4.80 | 4.70 | 5.20 | 12.40 | 3.80 | 4.40 | 3.60 | 3.80 | 7.6 | 4.6 | 7 | 4.5 | 12.60 |

EP 4 386 044 A1

19

INDUSTRIAL APPLICABILITY

The present invention can provide a masterbatch for foam molding from which a foam molded article capable of maintaining foaming over time and having less excessive foaming can be produced. The present invention can also provide a foam molded article produced using the masterbatch for foam molding.

**Claims**

1.  A masterbatch for foam molding comprising:

    a base resin; and
    a thermally expandable microcapsule,
    the masterbatch satisfying a ratio of a porosity with a pore size of 0.001 $\mu$m or more to an interfacial area per unit weight (porosity with a pore size of 0.001 um or more/interfacial area per unit weight) of 0.015%/cm$^2$/g or less and having a volatile content of 0.7% by weight or less.

2.  The masterbatch for foam molding according to claim 1,
    wherein a particle size distribution (CV value) is 20% or less.

3.  The masterbatch for foam molding according to claim 1 or 2,
    wherein a porosity with a pore size of 0.1 $\mu$m or more is 4% or less.

4.  The masterbatch for foam molding according to any one of claims 1 to 3,
    wherein the porosity with a pore size of 0.001 um or more is 11% or less.

5.  The masterbatch for foam molding according to any one of claims 1 to 4,
    wherein the base resin includes at least one selected from the group consisting of a polyethylene-based resin and an acrylic resin.

6.  The masterbatch for foam molding according to any one of claims 1 to 5,
    wherein the base resin is contained in an amount of 30% by weight or more and 80% by weight or less and the thermally expandable microcapsule is contained in an amount of 20% by weight or more and 70% by weight or less.

7.  The masterbatch for foam molding according to any one of claims 1 to 6,
    wherein the masterbatch has an interfacial area per unit weight of 500 to 1,600 cm$^2$/g.

8.  A foam molded article comprising the masterbatch for foam molding according to any one of claims 1 to 7.

**INTERNATIONAL SEARCH REPORT**

| International application No. |
| --- |
| **PCT/JP2022/030432** |

| | |
| --- | --- |
| **A.** **CLASSIFICATION OF SUBJECT MATTER** | |
| *C08J 9/32*(2006.01)i; *B01J 13/14*(2006.01)i; *C08J 3/22*(2006.01)i; *C08J 9/14*(2006.01)i; *C09K 3/00*(2006.01)i<br>FI: C08J9/32; B01J13/14; C08J9/14; C09K3/00 111B; C08J3/22 CES | |
| According to International Patent Classification (IPC) or to both national classification and IPC | |

| |
| --- |
| **B.** **FIELDS SEARCHED** |
| Minimum documentation searched (classification system followed by classification symbols) |
|     C08J9/32; B01J13/14; C08J3/22; C08J9/14; C09K3/00 |
| Documentation searched other than minimum documentation to the extent that such documents are included in the fields searched |
|     Published examined utility model applications of Japan 1922-1996<br>    Published unexamined utility model applications of Japan 1971-2022<br>    Registered utility model specifications of Japan 1996-2022<br>    Published registered utility model applications of Japan 1994-2022 |
| Electronic data base consulted during the international search (name of data base and, where practicable, search terms used) |
| |

| | | |
| --- | --- | --- |
| **C.** **DOCUMENTS CONSIDERED TO BE RELEVANT** | | |
| Category* | Citation of document, with indication, where appropriate, of the relevant passages | Relevant to claim No. |
| A | JP 2020-045484 A (SEKISUI CHEM. CO., LTD.) 26 March 2020 (2020-03-26)<br>    claims, examples, entire text | 1-8 |
| A | JP 2020-045485 A (SEKISUI CHEM. CO., LTD.) 26 March 2020 (2020-03-26)<br>    claims, examples, entire text | 1-8 |
| A | WO 2015/119048 A1 (MATSUMOTO YUSHI-SEIYAKU CO., LTD.) 13 August 2015<br>(2015-08-13)<br>    claims, examples, entire text | 1-8 |
| E, A | JP 7128371 B1 (SEKISUI CHEM. CO., LTD.) 30 August 2022 (2022-08-30)<br>    claims, examples, entire text | 1-8 |

| |
| --- |
| ☐ Further documents are listed in the continuation of Box C.     ☑ See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
| --- | --- |
| Date of the actual completion of the international search | Date of mailing of the international search report |
| **06 October 2022** | **25 October 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**
Information on patent family members

International application No.

**PCT/JP2022/030432**

| Patent document cited in search report | | | Publication date (day/month/year) | Patent family member(s) | | | Publication date (day/month/year) |
|---|---|---|---|---|---|---|---|
| JP | 2020-045484 | A | 26 March 2020 | JP | 2022-66262 | A | |
| JP | 2020-045485 | A | 26 March 2020 | (Family: none) | | | |
| WO | 2015/119048 | A1 | 13 August 2015 | US | 2017/0009039 | A1 | |
| | | | | claims, examples | | | |
| | | | | CN | 105980453 | A | |
| | | | | SE | 1651171 | A | |
| | | | | KR | 10-2016-0117581 | A | |
| JP | 7128371 | B1 | 30 August 2022 | (Family: none) | | | |

Form PCT/ISA/210 (patent family annex) (January 2015)

**EP 4 386 044 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000178372 A

- JP H11343362 A